(19)

Europäisches Patentamt
European Patent Office
Office européen des brevets

(11) EP 2 669 704 B1

(12) **EUROPEAN PATENT SPECIFICATION**

(45) Date of publication and mention of the grant of the patent:
**06.04.2016 Bulletin 2016/14**

(51) Int Cl.:
**G01S 13/93** *(2006.01)*        **G08G 5/04** *(2006.01)*
**G01S 7/00** *(2006.01)*         **G01S 13/91** *(2006.01)*

(21) Application number: **13166337.9**

(22) Date of filing: **02.05.2013**

(54) **Airport surface collision-avoidance system (ASCAS)**

Flughafen-Bodenkollisionsvermeidungssystem (ASCAS)

Système d'évitement de collision sur surface d'aéroport (ASCAS)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2012   US 201261653297 P**
**27.09.2012   US 201261706632 P**
**10.12.2012   US 201213710400**

(43) Date of publication of application:
**04.12.2013   Bulletin 2013/49**

(73) Proprietor: **Honeywell International Inc.**
**Morris Plains, NJ 07950 (US)**

(72) Inventors:
• **Bateman, C. Don**
**Morristown, NJ 07962-2245 (US)**

• **Derouineau, Jean-Luc**
**Morristown, NJ 07962-2245 (US)**
• **Neuzil, Tomas**
**Morristown, NJ 07962-2245 (US)**
• **Papageorgiou, George**
**Morristown, NJ 07962-2245 (US)**

(74) Representative: **Houghton, Mark Phillip**
**Patent Outsourcing Limited**
**1 King Street**
**Bakewell, Derbyshire DE45 1DZ (GB)**

(56) References cited:
**US-A- 6 118 401**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

The Flight Safety Foundation (FSF) estimates the apron damage costs to the world's airliners to be $4 billion every year. For corporate fleets, the damage-related cost was estimated to be $1 billion annually.

The presented apron damage costs include direct costs resulting from material and work related to an accident, and indirect costs resulting from aircraft being not in operation, harming the public image of airliner, incident investigations, etc.

Three main causes of surface accidents were indentified from the NTSB database: the failure to maintain adequate visual lookout, the failure to perceive distance between the wings and obstacles, and the failure to maintain required clearance.

US patent 6,118,401 discloses a system and method for avoiding collision between objects and wingtips of an aircraft when the aircraft is on the ground includes mounting detecting devices such as a low cost radar unit and a video camera in the wingtip. These detection devices are coupled with one or more indicators to provide an operator of the aircraft such as a pilot that an imminent collision with an object is about the occur. The indication can be an audio or visual signal, either within or outside of the aircraft.

**SUMMARY OF THE INVENTION**

The present invention provides an airport surface collision-avoidance system (ASCAS) and a corresponding method as claimed in the accompanying claims.

**BRIEF DESCRIPTION OF THE DRAWINGS**

Preferred and alternative embodiments of the present invention are described in detail below, with reference to the following drawings:

FIGURE 1 is a diagram of an exemplary system formed in accordance with an embodiment of the present invention;
FIGURES 2 and 3 are top views of an aircraft used in the system shown in FIGURE 1;
FIGURE 4 is an exploded perspective view of a wing assembly formed in accordance with an embodiment of the present invention;
FIGURE 5 is a front view of an aircraft fuselage formed in accordance with an embodiment of the present invention;
FIGURES 6 and 7 are x-ray top views of wing assemblies formed in accordance with embodiments of the present invention; and
FIGURES 8-10 show various user interface images for use by anyone involved in the safe movement of an aircraft.

**DETAILED DESCRIPTION OF THE INVENTION**

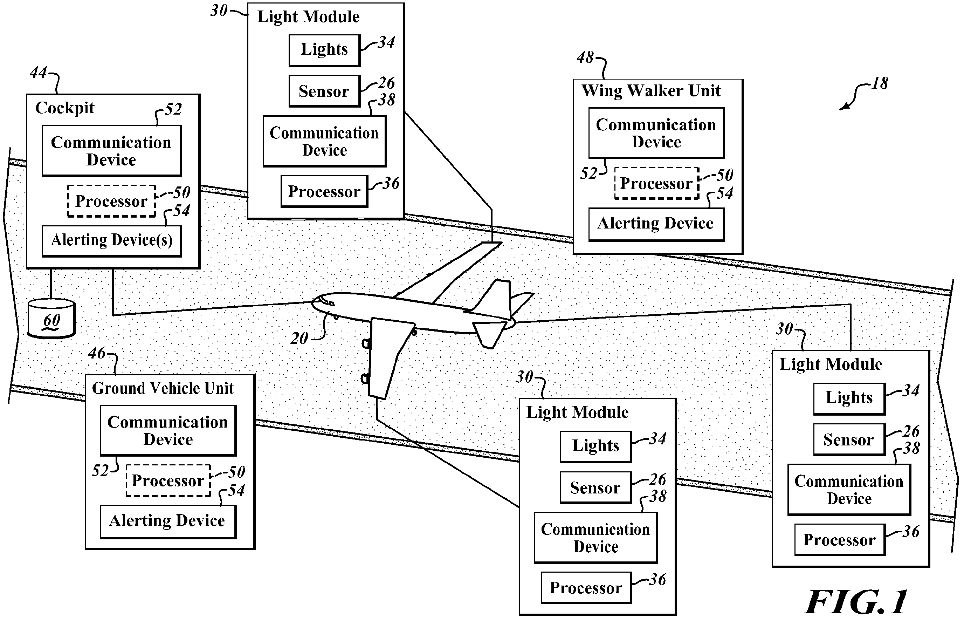

In one embodiment, as shown in FIGURE 1, an exemplary airport surface collision-avoidance system (ASCAS) 18 includes components on an aircraft 20 and components removed from the aircraft 20. The aircraft 20 includes sensors (e.g., active sensor (e.g., radar) and/or passive sensor (e.g., camera) 26 included within aircraft light modules 30. The light modules 30 also include navigation/position lights 34, a processor 36, and a communication device 38. The sensors 26 are in communication via the communication device 38 (wired or wirelessly) to one or more user interface (UI) devices 44-48.

In one embodiment, the UI devices 44-48 include a processor 50 (optional), a communication device (wired or wireless) 52, and an alerting device(s) 54. The UI devices 44-48 for pilots and/or for ground crew (tug driver, wing-walkers, etc.) provide audio and/or visual cues (e.g., via headphones, PC tablets, etc.) based on sensor-derived and processed information.

Based on information from the sensors 26, the UI devices 44-48 provide some or all of the following functions: detect and track intruders, evaluate and prioritize threats, and declare and determine actions. Once an alert associated with a detection has been produced, then execution of a collision-avoidance action (e.g., stop the aircraft, maneuver around intruder, etc.) is manually performed by a pilot or tug driver, if in a towing situation, or automatically by an automation system (e.g., autobrakes).

In one embodiment, processing of the sensor information is done by the processor 36 at the sensor level and/or the processor 50 at the UI devices 44-48.

In one embodiment, situational awareness is improved by integration with automatic dependent surveillance - broadcast/traffic information service - broadcast (ADS-B/TIS-B), airport/airline information on vehicles/aircraft/obstacles (e.g., through WiMax), and with synthetic vision system/enhanced vision system/combined vision system (SVS/EVS/CVS) received by the respective devices using the communication device 38.

In one embodiment, the present invention reduces false alarms by exploiting flight plan and taxi clearance information, and airport building/obstacle databases stored in memory 60 or received from a source via the communication devices 50.

The sensors 26 included in the wing and tail navigation light modules provide near-complete sensor coverage of the aircraft 20. Full coverage can be attained by placing sensors in other lights that are strategically located on the aircraft 20.

The present invention provides different UI devices for different stakeholders: through electronic flight bag (EFB)/primary flight display (PFD)/multifunction display (MFD)/navigation display to pilots, EFB/headset to tug drivers, headset to wing-walkers, etc.

The pilot and tug driver are alerted aurally, visually, and/or tactilely. For example, a visual alert presented on an EFB display shows aircraft wingtips outlined or a highlight of any obstructions. Aural alerting is through existing installed equipment, such as the interphone or other warning electronics or possibly the enhanced ground proximity warning system (EGPWS) platform.

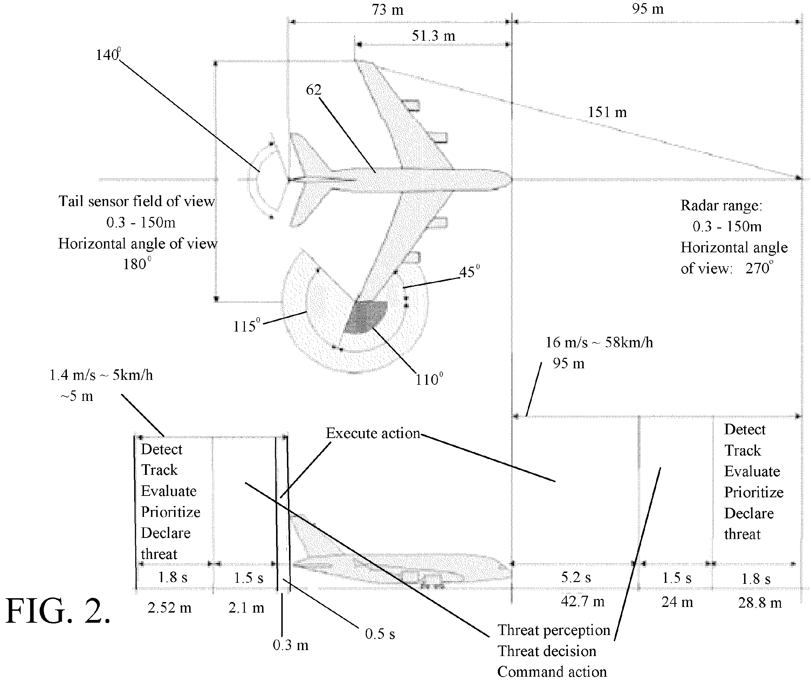

The fields of view (FOVs) of the sensors 26 included at the wingtips and tail provide ideal coverage of aircraft vicinity - see FIGURE 2-1. The FOV of the sensors 26 are based on a candidate technology (radar), constraints associated with placing the radars inside the wing/tail navigation light modules 30 and typical accident geometries for the host aircraft. Other FOVs are possible, depending upon where one places the sensors 26.

The sensor range depends on the times to 1) detect intruders, 2) evaluate the situation, 3) command an action and 4) execute the action (e.g. break the aircraft). Times are estimated based on the computational speed of intruder detection and other algorithms, and typical pilot reaction times and aircraft breaking times. FIGURE 2 illustrates an example of calculated times/distances for a particular aircraft 62 (e.g., A380) based on the following assumptions:

- Reaction time 1.5 sec.
- Aircraft braking coefficient $\mu B = 0.3$.
- Aircraft is producing zero lift.
- No skid is assumed.
- Braking action is executed by aircraft.

***Front distance:***

- Aircraft ground speed of 16 m/s.

***Rear distance:***

• Aircraft ground speed of 1.4 m/s, which corresponds to the speed of the aircraft being pushed backwards (fast human walk).

Aircraft braking coefficient ($\mu_B$) includes a coefficient summarizing the retarding forces acting on a wheel under braking. In one embodiment, $\mu_B = F_{braking}/(mg - L)$. Quantities are: $F_{braking}$ - braking force, *m* - aircraft mass, *L - lift, g -* gravitational acceleration. The aircraft braking coefficient is not equivalent to the tire-to-ground friction coefficient. The estimated airplane braking coefficient is an all-inclusive term that incorporates effects due to the runway surface, contaminants, and airplane braking system (e.g., antiskid efficiency, brake wear).

The resulting time for executing corrective action is derived from relation between work and object energy. The work is defined as:

$$W = F_{braking}d \qquad (1)$$

where

$$F_{braking} = \mu_B(mg - L) \tag{2}$$

For zero lift (the lift produced by the aircraft during slow motions can be neglected) is stated:

$$W = m\mu_B gd \tag{3}$$

Braking distance derived from the relation between work and energy is:

$$m\mu_B gd = \frac{1}{2}mv^2$$

$$d = \frac{v^2}{2\mu_B g} \tag{4}$$

By substitution, distance of uniformly decelerated motion is:

$$d = \frac{1}{2}\mu_B gt^2 \tag{5}$$

The formula for resulting time needed to decelerate the aircraft at given braking force is derived as:

$$t = \frac{v}{\mu_B g} \tag{6}$$

Equation 6 is used to define the time needed to stop the aircraft during the highspeed taxi in the vicinity of the runway, as well as for determination of time to stop while the aircraft is being pushed back out of the gate.

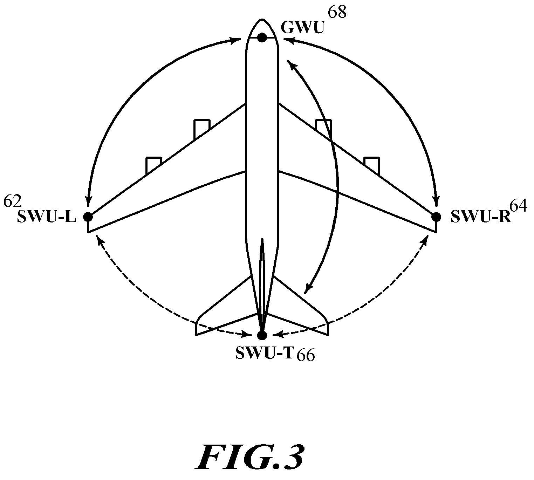

The communication devices 38 located in the light modules 30 are denoted as sensor wireless units (SWU) see FIGURE 3. The data measured by the sensors 26 are transmitted by the SWUs to a gateway wireless unit (GWU) located somewhere close to or in the cockpit (e.g., the communication device 52 is located in the cockpit UI device 44). The GWU is connected to a central unit (i.e., the processor 50), which performs data processing and interfaces to the pilot or other personnel giving information about the surrounding obstacles. The GWU could be included in modules 44, 46 or 48. Also, the SWUs can transmit directly to the GWU or to the GWU via another SWU.

In one embodiment, the wireless sensor network includes three SWU nodes 62-66 (within the starboard, port, and taillight modules 30) and one GWU 68 (within the UI device 44). Signals transmitted between the wing SWUs 62, 64 and the GWU 68 are transmitted directly. Signals from the SWU-T 66 are transmitted either directly to the GWU 68 or routed through the wing SWUs 62, 64, depending on the link capability between the GWU 68 and the SWU-T 66.

In one embodiment, the SWUs 62-66 and the GWU 68 include OneWireless™ devices produced by Honeywell, Inc. and adapted to ASCAS requirements. Special antennas are used with these devices to ensure proper link power budget. Other wireless protocols may be used, such as 802.11 (WLAN) radio technology.

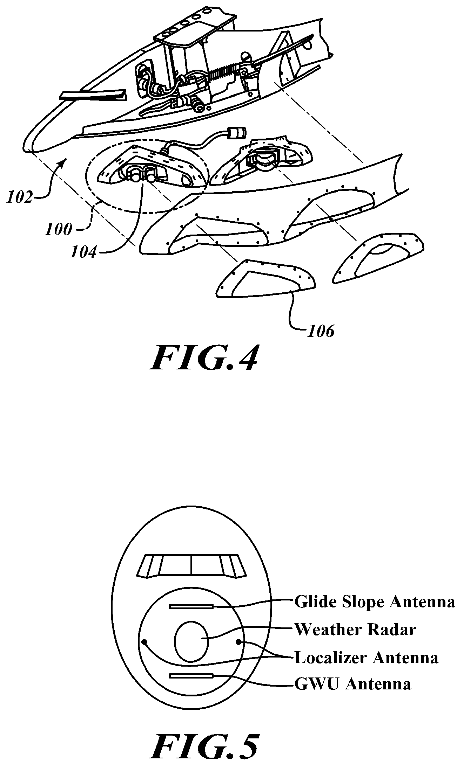

As an example, FIGURE 4 shows a light compartment 100 of a Boeing 737NG winglet 102. The compartment 100 includes a position light 104 with two LED assemblies or two halogen bulbs (based on the light version). The light compartment 100 includes:

- Antenna - e.g., 2-4 cm. The antenna is located behind a glass cover 106.
- SWU - the unit itself is located in the body of the wing close to the power units.

In one embodiment, a wireless module is located directly in the light compartment 100 with an antenna mounted on or in the glass 106.

Position and distance of obstacles (e.g., other vehicles/aircraft, buildings, etc.) detected are visually represented on an EFB application display with multiple alert modes (e.g., clear, caution, and warning modes). The position and distance of obstacles information may also be presented on another cockpit display, e.g., the multi-function display (MFD).

In case of an alert, a sound-beep is activated and is played using a crew-alerting system (CAS). If a caution level is reached, the frequency (time between beeps) of beeping is increased, changing into a continuous tone for warning level. See Tables 1 and 2. Other visual/audio alerting techniques may be used.

Table 1: ASCAS Alerts

| Alert | Description |
| --- | --- |
| No alert (clear) | Ownship is not in threat of collision with obstacle |
| Caution | Ownship is on collision course with obstacle<br>Operator for the system needs to monitor the situation and prepare for corrective action |
| Warning | Ownship is in immediate danger of collision with obstacle<br>Operator of the system needs to immediately proceed with corrective action to avoid collision |

Table 2: HMI Concept for Aircraft Crew

| HMI type | Information provided | Notes |
| --- | --- | --- |
| Visual representation EFB application | Visualization of obstacle position and distance<br>Visualization of alerts | Modality with high information bandwidth (information about position, distance, and alert type) |
| Sound-beeping increasing/decreasing frequency (modify time between beeps) | Sound-beep (nuisance) | Feeling of high-urgency<br>Head-up solution<br>Easy to recognize |
| Oral (voice) | Oral messages reporting alert position (left/right/rear) | Moderate urgency<br>Head-up solution |

In one embodiment, a voice command describing the position of the obstacle, based on processed sensor data, is played through the CAS when caution and warning alerts are active: "Left" - collision danger on left wing, "Right" - collision danger on right wing, "Rear" - collision danger in rear part of fuselage (push-back operation).

The UI device for a tug tractor driver is similar to that for the aircraft crew, except that the application for visual modality is hosted on a handheld device or tablet and only nuisance sound output is used (using device's built-in speaker or a wired or wireless link to a user's headset/earbuds).

The UI device 48 for wing-walkers includes headphones or earbuds as the alerting device 54 for a received alert or a locally processed alert based on signals from at least one aircraft-based sensor. See Table 3.

Table 3: HMI Concept for Ground Crew - Wing Walkers

| HMI type | Information provided | Notes |
| --- | --- | --- |
| Sound-beeping increasing/decreasing frequency (modify time between beeps) | Sound-beep (nuisance) | Feeling of high-urgency<br>Head-up solution<br>Easy to recognize |

The ASCAS configuration (number of sensors) can differ, depending upon aircraft operator's preferences. Depending on the required level of protection, wireless radars could be added to other aircraft lights.

Position lights with LED technology provide more space in the light compartments, decrease the inside temperature, and provide more available power. All these resources can be used for the sensors 26.

In one embodiment, the communication device antenna is an industrial, scientific, and medical (ISM) 2.4 GHz band and distance-measurement radar with related electronic gear. In one embodiment, a sensor node antenna for the ISM band wireless communication to the GWU is included in the position-light compartment. In one embodiment, the antenna is placed under a light glass light cover, which is expected to be transparent for RF signal communication. The antenna also provides sufficient gain for the errorless communication with the GWU and, in some cases, with the tail-mounted sensor node. In one embodiment, a directional antenna is used.

The directional antenna requires more space than omnidirectional dipoles do. Basically, there are two possible directional antenna types, Yagi and patch antennas. Both provide directional characteristics. The Yagi is flat and long in the direction of the main lobe; the patch antenna requires more space in the plane perpendicular to the main lobe axis. This means that Yagi antennas' front elements could interfere with the position light. On the other hand, the patch antenna requires more space between position-light components (LED reflectors, radar antenna lens).

In one embodiment, a cockpit antenna is included in a central handheld unit that includes a radio receiver. In one embodiment, the antenna resides in the cockpit and is located in a position most favoring signal reception from all sensors.

In one embodiment, an antenna is mounted on a roof of the cockpit. This position provides direct visibility from all sensors.

In one embodiment, an inside weather radar (WR) cone antenna is placed inside the nose weather radar cone - see FIGURE 5. The GWU antenna(s) are mounted under the cone in such way that they would not influence the WR performance. A single antenna is located on top or bottom of the WR compartment or two side-mounted antennas (FIGURE 5) are used.

In one embodiment, an antenna is shared with a GateLink antenna.

The following are exemplary sensors that can be used with the present invention: pulsed radar, frequency-modulated continuous wave (FMCW)/stepped modulated continuous wave (SFCW), millimeter wave (MMW) radars, phased-array radars (E-scanning), mechanical (M) scanning radar, optical sensors (IR, visible), acoustic sensors, or comparable sensors.

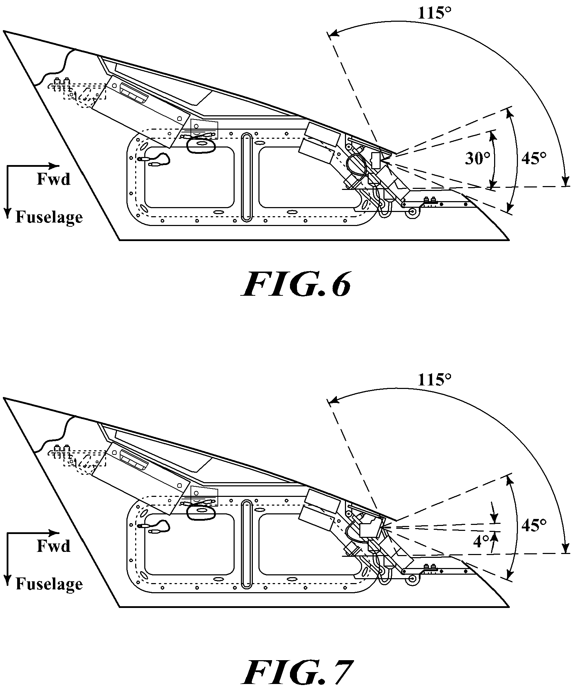

FIGURE 6 presents an exemplary configuration of a radar sensor with a fixed antenna that provides a wide-angle FOV (approximately 30°).

FIGURE 7 shows an exemplary configuration in which a radar antenna with a 4° beam is mechanically scanned using an electromotor. This configuration allows dividing the total sensor field into a given number of sectors. For vertical scanning another electromotor is provided.

In one embodiment, one power source is shared for both the radars (forward and aft) and the wireless module. In one embodiment, the common wireless module is placed in the forward position light and is used for transmitting data between the wing and the cockpit UI device or the tug tractor driver/wing-walker UI device.

The present invention makes the pilot/wing-walker/tug operator aware that an obstacle has been detected by means of a two-level "beeper". The system 18 works only on the ground. The system 18 detects obstacles at wingtip level during forward or backward movement (push-back).

In one embodiment, the navigation lights are turned off during push-back or towing operations. On entering or leaving the gate, the aircraft wingtip sensors do not consider the detection of baggage carts or vehicles that are clear of the aircraft's wing and engine pylons or nacelles to be cause of an alert.

Wingtip velocity in a taxi turn may reach 8 meters per second (27 fps) and, in one embodiment, the time for alerting and action by the pilot is set at eight seconds based on the wingtip velocity information. In one embodiment, the system derives a taxi ground speed related to the wingtip, in order to alter the detection time.

In one embodiment, wing walkers are equipped with a walkie-talkie device (UI device 48) fitted with slow-stop-go buttons that, when activated, alert all parties (UI devices) involved with an associated aircraft movement signal. The tug operator, the plane captain or mechanic operating the brakes sees activated lights or hears an aural alert, depending upon which button the wing-walker activated.

In one embodiment, the processor 50 detects and tracks intruders, evaluates and prioritizes threats, and declares and determines actions to be taken.

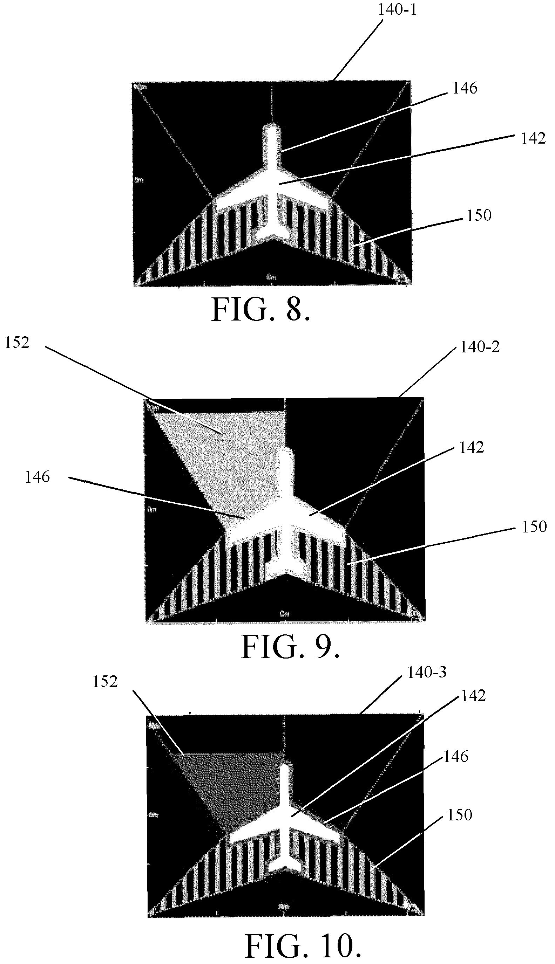

FIGURES 8-10 show exemplary images 140-1 thru 140-3 that may be presented on any of the displays of the UI devices 44-48. They would be particularly useful for use on the wing walker and ground vehicle units.

As shown in FIGURE 8, the image 140-1 includes an aircraft icon 142. A blind spot zone 150 is identified by a different shading and/or coloring in order to indicate a blind spot area around the associated aircraft. The image 140 is presented to the users of one or more of the UI devices 44-48 if there are no perceived collision threats. A border 146 around the aircraft icon 142 is presented in a first color (e.g., green) or shading when no collision threats (i.e., obstacles) have been perceived by any sensors.

As shown in FIGURE 9, the image 140-2 shows the situation when an obstacle has been identified in a first threat region in front of and to the left of the associated aircraft. The border 146 is presented in a second color (e.g., yellow) and/or shading when the obstacle has been identified. A region 152 in front and to the left of the aircraft icon 142 is similarly colored and/or shaded as the border 146 in order to indicate the obstacle.

As shown in FIGURE 10, the image 140-3 shows the situation when an obstacle has been identified in a second threat region in front of and to the left of the associated aircraft. The second threat region may be one that requires immediate action by the aircraft or flight crew. The region 152 in front and to the left of the aircraft icon 142 is presented in a second color (e.g. red) and/or shaded differently from other regions around the aircraft icon 142 in order to indicate an imminent threat. Also, the border 146 is presented in the same color and/or shading as the region 152.

**Claims**

1. A system (18) comprising:

   a first light module (30) comprising:

   at least one of an active sensor and a passive sensor (26) configured to generate a first signal;
   one or more lights (34); and
   a communication device (38) configured to wirelessly transmit information associated with the generated first signal,
   wherein the first light module (30) is located at a first location on an aircraft (20);

   at least one user interface (UI) device (44-48) comprising:

   a communication device (52) configured to receive the information transmitted from the communication device (38) of the first light module (30); and
   an output device (54) configured to output information associated with the received information,

   a second light module (30) comprising:

   at least one of an active sensor and a passive sensor (26) configured to generate a second signal;
   one or more lights (34); and
   a communication device (38) configured to wirelessly transmit information associated with the generated second signal,
   wherein the second light module is located at a second location on the aircraft (20),

   wherein the communication device (52) of the first light module (30) is configured to wirelessly receive the information from the communication device of the second light module and transmit the received information to the at least one UI device (44-48),
   wherein at least one of the at least one UI device (44-48) and the first light module (30) comprises a processor configured to determine presence of obstacles that are a threat to the aircraft (20) based on the generated signals,
   wherein the at least one UI device (44-48) is located in at least one of a cockpit of the aircraft (20), a ground-based vehicle or a hand-held device remote from the aircraft (20).

2. The system of Claim 1, wherein the at least one UI device (44-48) provides at least one audio, visual and tactile cue via the output device (54).

3. The system of Claim 1, wherein the one or more lights (34) comprise navigation light(s).

4. The system of Claim 1, wherein the second light module comprises a processor (36) configured to determine presence of obstacles that are a threat to the aircraft (20).

5. A method comprising:

   at a first light module (30) located at a first location on a host aircraft (20),

   providing a visual illumination from one or more lights (34);
   receiving a signal from at least of an active sensor and a passive sensor (26); and
   wirelessly transmitting information associated with the received signals from a communication device (38);

   at least one user interface (UI) device (44-48),

   receiving the information transmitted from the communication device of the first light module (30); and
   outputting information associated with the received information via an output device (54),

at a second light module (30) located at a second location on the host aircraft (20),

> providing a visual illumination from one or more lights (34);
> receiving a signal from at least one of an active sensor and a passive sensor (26); and
> wirelessly transmitting information associated with the received signal from a communication device (38) to the at least one UI device (44-48) via the communication device of the first light module (30),

> wherein the outputted information indicates presence of obstacles that are a threat to the host aircraft (20),
> wherein the at least one UI device (44-48) is located in at least one of a cockpit of the aircraft (20), a ground-based vehicle or a hand-held device remote from the host aircraft (20).

6. The method of Claim 5, wherein outputting comprises providing at least one of an audible, a visual and a tactile output.

7. The method of Claim 5, wherein the one or more lights (34) comprise navigation light(s).

**Patentansprüche**

1. System (18), das umfasst:

ein erstes Leuchtenmodul (30), das umfasst:

> mindestens einen eines aktiven Sensors und eines passiven Sensors (26), der so ausgebildet ist, dass er ein erstes Signal erzeugt;
> eine oder mehrere Leuchten (34); und
> eine Kommunikationsvorrichtung (38), die so ausgebildet ist, dass sie Informationen, die dem erzeugten ersten Signal zugeordnet sind, drahtlos sendet,
> wobei sich das erste Leuchtenmodul (30) an einer ersten Stelle an dem Flugzeug (20) befindet;

mindestens eine Nutzerschnittstellen- (UI-) Vorrichtung (44-48), die umfasst:

> eine Kommunikationsvorrichtung (52), die so ausgebildet ist, dass sie die Informationen empfängt, welche von der Kommunikationsvorrichtung (38) des ersten Leuchtenmoduls (30) gesendet werden; und
> eine Ausgabevorrichtung (54), die so ausgebildet ist, dass sie Informationen ausgibt, welche den empfangenen Informationen zugeordnet sind,

ein zweites Leuchtenmodul (30), das umfasst:

> mindestens einen eines aktiven Sensors und eines passiven Sensors (26), der so ausgebildet ist, dass er ein zweites Signal erzeugt;
> eine oder mehrere Leuchten (34); und
> eine Kommunikationsvorrichtung (38), die so ausgebildet ist, dass sie Informationen, die dem erzeugten zweiten Signal zugeordnet sind, drahtlos sendet,
> wobei sich das zweite Leuchtenmodul an einer zweiten Stelle an dem Flugzeug (20) befindet;

wobei die Kommunikationsvorrichtung (52) des ersten Leuchtenmoduls (30) so ausgebildet ist, dass sie die Informationen von der Kommunikationsvorrichtung des zweiten Leuchtenmoduls drahtlos empfängt und die empfangenen Informationen zu der mindestens einen UI-Vorrichtung (44-48) sendet,
wobei die mindestens eine UI-Vorrichtung (44-48) und das erste Leuchtenmodul (30) einen Prozessor umfassen, der so ausgebildet ist, dass er das Vorhandensein von Hindernissen, die eine Bedrohung für das Flugzeug (20) darstellen, auf der Basis der erzeugten Signale feststellt,
wobei sich die mindestens eine UI-Vorrichtung (44-48) an mindestens einem eines Cockpits des Flugzeugs (20), eines am Boden befindlichen Fahrzeugs oder einer Handvorrichtung, die von dem Flugzeug (20) entfernt ist, befindet.

2. System nach Anspruch 1, wobei die mindestens eine UI-Vorrichtung (44-48) mindestens einen hörbaren, sichtbaren oder fühlbaren Hinweis über die Ausgabevorrichtung (54) liefert.

**3.** System nach Anspruch 1, wobei die eine oder die mehreren Leuchten (34) (eine) Navigationsleuchte(n) umfassen.

**4.** System nach Anspruch 1, wobei das zweite Leuchtenmodul einen Prozessor (36) umfasst, der so ausgebildet ist, dass er das Vorhandensein von Hindernissen, die eine Gefahr für das Flugzeug (20) darstellen, feststellt.

**5.** Verfahren, das umfasst:

an einem ersten Leuchtenmodul (30), das sich an einer ersten Stelle eines Host-Flugzeugs (20) befindet,

Bereitstellen einer sichtbaren Beleuchtung aus einer oder mehreren Leuchten (34);
Empfangen eines Signals von mindestens einem eines aktiven Sensors und eines passiven Sensors (26); und
drahtloses Senden von Informationen, die den empfangenen Signalen zugeordnet sind, von einer Kommunikationsvorrichtung (38);

an mindestens einer Nutzerschnittstelle (UI) (44-48)

Empfangen der Informationen, die von der Kommunikationsvorrichtung des ersten Leuchtenmoduls (30) gesendet werden; und
Ausgeben von Informationen, die den empfangenen Informationen zugeordnet sind, über eine Ausgabevorrichtung (54),

an einem zweiten Leuchtenmodul (30), das sich an einer zweiten Stelle des Host-Flugzeugs (20) befindet,

Bereitstellen einer sichtbaren Beleuchtung aus einer oder mehreren Leuchten (34);
Empfangen eines Signals von mindestens einem eines aktiven Sensors und eines passiven Sensors (26); und
drahtloses Senden von Informationen, die dem empfangenen Signal zugeordnet sind, von einer Kommunikationsvorrichtung (38) über die Kommunikationsvorrichtung des ersten Leuchtenmoduls (30) zu der mindestens einen UI-Vorrichtung (44-48);
wobei die ausgegebenen Informationen das Vorhandensein von Hindernissen anzeigen, die eine Gefahr für das Host-Flugzeug (20) darstellen,
wobei sich die mindestens eine UI-Vorrichtung (44-48) an mindestens einem eines Cockpits des Flugzeugs (20), eines am Boden befindlichen Fahrzeugs oder einer Handvorrichtung, die von dem Flugzeug (20) entfernt ist, befindet.

**6.** Verfahren nach Anspruch 5, wobei das Ausgeben das Liefern mindestens eines eines hörbaren, eines sichtbaren und eines fühlbaren Ausgangs umfasst.

**7.** Verfahren nach Anspruch 5, wobei die eine oder die mehreren Leuchten (34) (eine) Navigationsleuchte(n) umfassen.

**Revendications**

**1.** Système (18) comprenant :

un premier module de feux (30) comprenant :

au moins l'un d'un capteur actif et d'un capteur passif (26) configuré pour générer un premier signal ;
un ou plusieurs feux (34) ; et
un dispositif de communication (38) configuré pour transmettre en mode sans fil des informations associées au premier signal généré,
dans lequel le premier module de feux (30) est situé à un premier emplacement sur un aéronef (20) ;

au moins un dispositif d'interface utilisateur (UI) (44-48) comprenant :

un dispositif de communication (52) configuré pour recevoir les informations transmises par le dispositif de communication (38) du premier module de feux (30) ; et

un dispositif de sortie (54) configuré pour produire en sortie des informations associées aux informations reçues,

un second module de feux (30) comprenant :

au moins l'un d'un capteur actif et d'un capteur passif (26) configuré pour générer un second signal ;
un ou plusieurs feux (34) ; et
un dispositif de communication (38) configuré pour transmettre en mode sans fil des informations associées au second signal généré,
dans lequel le second module de feux (30) est situé à un second emplacement sur l'aéronef (20) ;

dans lequel le dispositif de communication (52) du premier module de feux (30) est configuré pour recevoir en mode sans fil les informations provenant du dispositif de communication du second module de feux et transmettre les informations reçues à l'au moins un dispositif UI (44-48),
dans lequel au moins l'un de l'au moins un dispositif UI (44-48) et du premier module de feux (30) comprend un processeur configuré pour déterminer la présence d'obstacles qui constituent une menace pour l'aéronef (20) en fonction des signaux générés,
dans lequel l'au moins un dispositif UI (44-48) est situé dans au moins l'un d'un cockpit de l'aéronef (20), d'un véhicule au sol ou d'un dispositif portable distant de l'aéronef (20).

2. Système selon la revendication 1, dans lequel l'au moins un dispositif UI (44-48) fournit au moins un indice audio, visuel et tactile par l'intermédiaire du dispositif de sortie (54).

3. Système selon la revendication 1, dans lequel les un ou plusieurs feux (34) comprennent un (des) feu(x) de navigation.

4. Système selon la revendication 1, dans lequel le second module de feux comprend un processeur (36) configuré pour déterminer la présence d'obstacles qui constituent une menace pour l'aéronef (20).

5. Procédé comprenant :

au niveau d'un premier module de feux (30) situé à un premier emplacement sur un aéronef hôte (20),

la fourniture d'un éclairage visuel à partir d'un ou de plusieurs feux (34) ;
la réception d'un signal depuis au moins l'un d'un capteur actif et d'un capteur passif (26) ; et
la transmission en mode sans fil d'informations associées aux signaux reçus depuis un dispositif de communication (38) ;

au niveau d'au moins un dispositif d'interface utilisateur (UI) (44-48),

la réception des informations transmises par le dispositif de communication du premier module de feux (30) ; et
la production en sortie d'informations associées aux informations reçues par l'intermédiaire d'un dispositif de sortie (54),

au niveau d'un second module de feux (30) situé à un second emplacement sur l'aéronef hôte (20),

la fourniture d'un éclairage visuel à partir d'un ou de plusieurs feux (34) ;
la réception d'un signal depuis au moins l'un d'un capteur actif et d'un capteur passif (26) ; et
la transmission en mode sans fil d'informations associées au signal reçu depuis un dispositif de communication (38) à l'au moins un dispositif UI (44-48) par l'intermédiaire du dispositif de communication du premier module de feux (30),

dans lequel les informations produites en sortie indiquent la présence d'obstacles qui constituent une menace pour l'aéronef hôte (20),
dans lequel l'au moins un dispositif UI (44-48) est situé dans au moins l'un d'un cockpit de l'aéronef (20), d'un véhicule au sol ou d'un dispositif portable distant de l'aéronef hôte (20).

6. Système selon la revendication 5, dans lequel la production en sortie comprend la fourniture d'au moins l'une d'une sortie audible, visuelle et tactile.

7. Procédé selon la revendication 5, dans lequel les un ou plusieurs feux (34) comprennent un (des) feu(x) de navigation.

FIG.1

EP 2 669 704 B1

73 m

95 m

51.3 m

140°

62

151 m

Tail sensor field of view
0.3 - 150m
Horizontal angle of view
180°

Radar range:
0.3 - 150m
Horizontal angle
of view:  270°

45°

115°

110°

16 m/s ~ 58km/h
95 m

1.4 m/s ~ 5km/h
~5 m

Execute action

Detect
Track
Evaluate
Prioritize
Declare
threat

Detect
Track
Evaluate
Prioritize
Declare
threat

| 1.8 s | 1.5 s | | | 5.2 s | 1.5 s | 1.8 s |
| 2.52 m | 2.1 m | | | 42.7 m | 24 m | 28.8 m |

0.3 m

0.5 s

Threat perception
Threat decision
Command action

FIG. 2.

**FIG.3**

102
100
104
106

**FIG.4**

Glide Slope Antenna
Weather Radar
Localizer Antenna
GWU Antenna

**FIG.5**

115°

30° 45°

Fwd

Fuselage

**FIG.6**

115°

45°

4°

Fwd

Fuselage

**FIG.7**

FIG. 8.

FIG. 9.

FIG. 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6118401 A